# EUROPEAN PATENT APPLICATION

(11) **EP 4 838 836 A1**
(43) Date of publication of application: **11.11.2026**
(21) Application number: 26175410.5
(22) Date of filing: 29.04.2026
(51) Int. Cl.: H04L 9/40, G06F 21/57

(54) **AUTO-DEPLOYING IDENTITY SECURITY CONTROLS VIA AUTONOMOUS PENTESTING AFTER CREDENTIAL DISCOVERY**

(30) Priority: 07.05.2025 US 202519201292
(71) Applicant: Horizon 3 AI, Inc., Dover, Delaware 19901 (US)
(72) Inventor: HORSEMAN, James Walter, Dover, DE, 19901 (US); HANLEY, Zachary Daniel, Dover, DE, 19901 (US); SUNKAVALLY, Naveen Naga, Dover, DE, 19901 (US); ANTANI, Snehal, Dover, DE, 19901 (US)
(74) Representative: Patentship Patentanwaltsgesellschaft mbH

(57) **Abstract**

An autonomous pentesting agent (105) may execute autonomous pentesting operations (415) during an autonomous pentest (405) on a network. The agent (105) may perform an identity compromise assessment procedure (440) on one or more credentials (425) identified during the autonomous pentest (405) based on the autonomous pentesting operations (415). Performing the identity compromise assessment procedure (440) may include determining, for a credential (425) of the one or more credentials (425), a capability of the credential (425) to access network assets of the network and of a user account associated with the credential (425) to perform operations within the network. The agent (105) may perform one or more modifications to an identity security policy (445) that manages use of the one or more credentials (425) in accordance with the identity compromise assessment procedure (440), where the one or more modifications inhibit unauthorized use of the credential (425) of the one or more credentials (425).

## Description

### BACKGROUND

In networking, penetration testing or "pentesting" refers to conducting security operations that simulate a cybersecurity attack in order to identify vulnerabilities in a network. The goal of pentesting is to mimic the actions of a malicious actor and discover loopholes or other vulnerabilities before they can be exploited. Pentesting may include techniques such as scanning for vulnerabilities, testing system configurations and security protocols, and attempting controlled attacks to evaluate defense mechanisms within a network. Network administrators can remediate vulnerabilities uncovered during pentesting to prevent malicious actors from compromising network security using those vulnerabilities. Practicing regular pentesting can aid in maintaining high security standards, protecting sensitive data, and ensuring the continuity of network services.

### SUMMARY

The described techniques relate to improved methods, systems, devices, and apparatuses that support auto-deploying identity security controls via autonomous pentesting after credential discovery.

In some aspects, the techniques described herein relate to a method for deploying identity security controls based on autonomous pentesting, including: executing one or more autonomous pentesting operations during an autonomous pentest on a network including a plurality of network assets; performing an identity compromise assessment procedure on one or more credentials identified during the autonomous pentest based at least in part on the one or more autonomous pentesting operations, wherein performing the identity compromise assessment procedure includes: determining, for a credential of the one or more credentials, a capability of the credential to access network assets of the plurality of network assets of the network and of a user account associated with the credential to perform operations within the network; and performing one or more modifications to an identity security policy that manages use of the one or more credentials in accordance with the identity compromise assessment procedure, wherein the one or more modifications inhibit unauthorized use of the credential of the one or more credentials.

In some aspects, the techniques described herein relate to an apparatus for deploying identity security controls based on autonomous pentesting, including: one or more memories storing processor-executable code; and one or more processors coupled with the one or more memories and individually or collectively operable to execute the code to cause the apparatus to: execute one or more autonomous pentesting operations during an autonomous pentest on a network including a plurality of network assets; perform an identity compromise assessment procedure on one or more credentials identified during the autonomous pentest based at least in part on the one or more autonomous pentesting operations, wherein, to perform the identity compromise assessment procedure, the one or more processors are individually or collectively further operable to execute the code to cause the apparatus to: determine, for a credential of the one or more credentials, a capability of the credential to access network assets of the plurality of network assets of the network and of a user account associated with the credential to perform operations within the network; and perform one or more modifications to an identity security policy that manages use of the one or more credentials in accordance with the identity compromise assessment procedure, wherein the one or more modifications inhibit unauthorized use of the credential of the one or more credentials.

In some aspects, the techniques described herein relate to a non-transitory computer-readable medium storing code for deploying identity security controls based on autonomous pentesting, the code including instructions executable by one or more processors to: execute one or more autonomous pentesting operations during an autonomous pentest on a network including a plurality of network assets; perform an identity compromise assessment procedure on one or more credentials identified during the autonomous pentest based at least in part on the one or more autonomous pentesting operations, wherein, to perform the identity compromise assessment procedure, the instructions are further executable by the one or more processors to: determine, for a credential of the one or more credentials, a capability of the credential to access network assets of the plurality of network assets of the network and of a user account associated with the credential to perform operations within the network; and perform one or more modifications to an identity security policy that manages use of the one or more credentials in accordance with the identity compromise assessment procedure, wherein the one or more modifications inhibit unauthorized use of the credential of the one or more credentials.

### BRIEF DESCRIPTION OF THE DRAWINGS

FIG. 1 shows an example of a computing environment that supports auto-deploying identity security controls via autonomous pentesting after credential discovery in accordance with aspects of the present disclosure.
FIG. 2 shows an example of an autonomous pentest map that supports auto-deploying identity security controls via autonomous pentesting after credential discovery in accordance with aspects of the present disclosure.
FIG. 3 shows an example of a computing environment that supports auto-deploying identity security controls via autonomous pentesting after credential discovery in accordance with aspects of the present disclosure.
FIG. 4 shows an example of a flow diagram that supports auto-deploying identity security controls via autonomous pentesting after credential discovery in accordance with aspects of the present disclosure.
FIG. 5 shows examples of identity security controls that may be deployed via autonomous pentesting after credential discovery in accordance with aspects of the present disclosure.
FIG. 6 shows a diagram of a system including a device that supports auto-deploying identity security controls via autonomous pentesting after credential discovery in accordance with aspects of the present disclosure.
FIG. 7 shows a flowchart illustrating methods that support auto-deploying identity security controls via autonomous pentesting after credential discovery in accordance with aspects of the present disclosure.

### DETAILED DESCRIPTION

In some examples, users of a network may use credentials to access network assets. For example, credentials may enable a user to verify their identity and access a user account associated with their identity, while access policies of the network may define which network assets (e.g., services, devices, resources) are accessible to or available for use by such a user account. In other words, the user account may have permissions or privileges (e.g., according to an access policy) to access network assets and/or perform operations on those network assets (e.g., read-only access, read/write access). Credentials, if obtained by a malicious actor, may allow the malicious actor to impersonate the user and access network assets available to the user account. A malicious actor may obtain credentials through leaks (e.g., after a data breach) or through phishing, malware installation, brute force, or other attack methods. A security impact associated with unauthorized access to a user account may be exacerbated by misconfigured permissions. That is, the user account may be associated with one or more permissions that are unused or unnecessary for the user associated with the user account. For example, the user account may be permitted to install software on a computing device of the network. This permission, though rarely or never used by the user, may be exploited by the malicious actor to install software such as ransomware or malware on the computing device, amplifying the impact and severity of unauthorized access to the user account. A security team may review permissions of user accounts but fail to identify whether credentials are exposed, vulnerable to exposure, or associated with misconfigured permissions.

An autonomous pentesting agent described herein may, in response to identifying (e.g., obtaining from a pentest or data leak) compromised credentials, deploy identity security policy modifications during an autonomous pentest. For example, the autonomous pentesting agent may assess credentials identified during an autonomous pentest based on capabilities of a user account associated with the credentials to access network assets and/or perform operations within a target network. The autonomous pentesting agent may perform modifications to an identity security policy that manages use of the credentials and/or permissions of a user account associated with the credentials based on assessing the credentials. As an example, the autonomous pentesting agent may trigger credential rotation after identifying an exposed credential, implement authentication policies, or modify privileges associated with the user account. By performing the modifications based on information obtained during autonomous pentesting of the target network, the autonomous pentesting agent may identify exposed or misconfigured credentials that other processes (e.g., manual reviews, environment scans, or other analysis) may fail to identify. Additionally, because the autonomous pentesting agent may identify credentials through a simulated attack on the target network (e.g., a pentest), the identity security policy may be modified in accordance with probable attack patterns, thereby more effectively inhibiting unauthorized use of credentials.

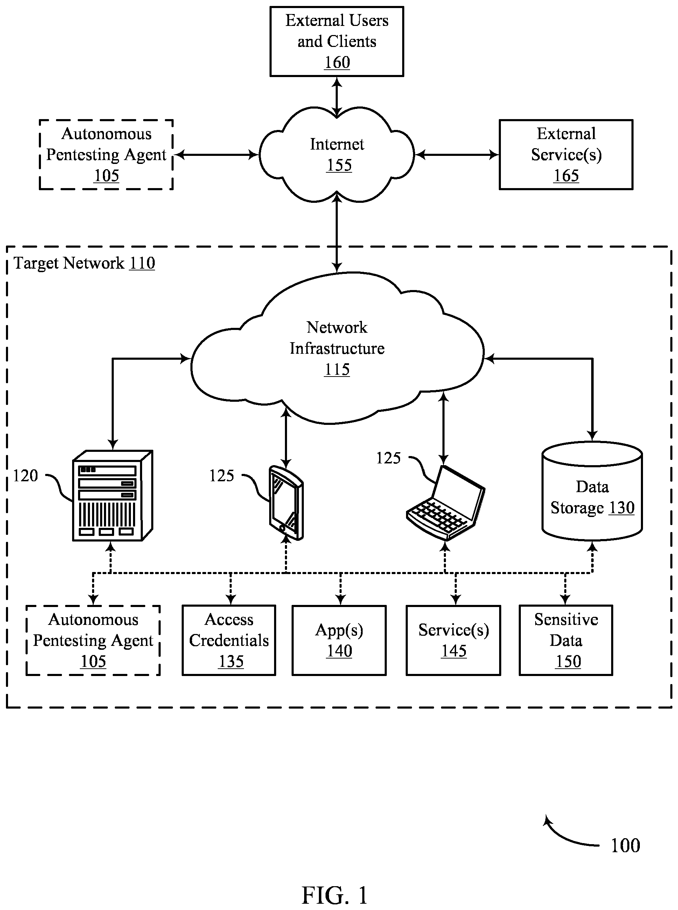

**FIG. 1** illustrates an example of a computing environment 100 that supports auto-deploying identity security controls via autonomous pentesting after credential discovery in accordance with aspects of the present disclosure. The computing environment 100 may include an autonomous pentesting agent 105 that performs an autonomous pentest of a target network 110. The target network 110 may include one or more devices or systems, such as a network infrastructure 115, server 120, computing devices 125, data storage 130, or any combination thereof. The devices or systems of the target network 110 may be configured to access or provide various network information and services, such as access credentials 135, app(s) 140, service(s) 145, sensitive data 150, or any combination thereof.

The target network 110 may allow the server 120, the computing devices 125, and the data storage 130 to communicate (e.g., exchange information) with one another. For example, the network infrastructure 115 may include any quantity of communications links and any quantity of hubs, bridges, routers, switches, ports, or other physical or logical network components that support communication between the server 120, computing devices 125, and data storage 130 of the target network 110 as well as communication between the target network 110 (e.g., the private network) and the Internet 155 or other external network (outside the target network 110, beyond a firewall associated with the target network 110, etc.). The target network 110 may include aspects of one or more wired networks, one or more wireless networks (e.g., cellular networks, Wi-Fi networks), or any combination thereof. The target network 110 may include aspects of one or more public networks or private networks, as well as secured or unsecured networks, or any combination thereof. For example, the target network 110 may be an example of a private network that includes one or more public-facing or external assets that are accessible via the Internet 155. As an example, the Internet 155 may refer to the world wide web, and users (e.g., external users and clients 160), may access the target network 110 via the Internet 155 through a website or application that is accessible or available via the Internet 155. For instance, the external users and clients 160, the external service(s) 165, or both may access network information and services via the Internet 155, including the access credentials 135, app(s) 140, service(s) 145, and sensitive data 150.

The target network 110 may be, or may be part of, a domain, such as a private domain associated with an organization, company, client, business, etc., defining an administrative boundary of the target network 110. The domain may include components such as computing devices 125, the server 120, etc., along with associated users (e.g., access credentials 135) and service(s) 145 that are governed or configured by one or more domain controllers and operate in accordance with policies that are put in place and managed by the one or more domain controllers. The domain may be divided into multiple subdomains or groups containing respective subsets of components, users (e.g., access credentials 135), and service(s) 145 that operate in accordance with a respective policy (e.g., group policy).

The target network 110 may be accessible via one or more hosts. For example, hosts may be examples of real or virtual machines that are connected to and capable of accessing the target network 110. Real machines may refer to machines having or made up of hardware components including a central processing unit (CPU), memory, hard drive, or the like, such as physical or tangible computers or servers (e.g., the server 120, the computing devices 125, etc.). Virtual machines may refer to software within or running on a physical computer or server using portions of the CPU, memory, hard drive, or the like of the physical computer or server. A physical computer or server may include or support multiple virtual machines, such as multiple tenants (e.g., in a multi-tenant environment). The server 120 and the computing devices 125 may be examples of hosts. Hosts may communicate data with other devices within the target network 110 and outside of the network (e.g., with devices accessible via the Internet 155). For example, the server 120 may send data to and receive data from one or more of the computing devices 125. Additionally, or alternatively, hosts may access resources of the target network 110, including the access credentials 135, app(s) 140, service(s) 145, or sensitive data 150. As used herein, hosts may refer to web hosts, cloud hosts, virtual hosts, remote hosts, or the like.

Hosts may be examples of and include network assets. For example, a host may be an example of a type of network asset that has access to other network assets, such as applications, services, and resources. As used herein, network assets refer to data, devices, or components of the target network 110, including data, software, and hardware. In some examples, network assets may refer to machines that include network shares. For example, network assets may be examples of machines (e.g., real or virtual machines) that include shares of the target network 110, such as file sharing systems. Network assets may be obtained and utilized by attackers to compromise the target network 110. In some cases, network assets may refer to network entities (e.g., system hosts or machines) that have internet protocol (IP) addresses and may be discovered during scans. The server 120, the computing devices 125 (e.g., laptops, desktops, mobile devices, smart vehicles, wearables), the data storage 130, and the access credentials 135, app(s) 140, service(s) 145, cookies, encryption and decryption keys, tokens, and sensitive data 150 accessible via the devices and systems of the target network 110 may all be examples of network assets. Other examples of network assets include virtual machines, printers, Internet-of-Things (IoT) devices, switches, routers, access points, endpoints, public static IPs, Lambdas and serverless architectures, Amazon Web Service (AWS) containers, and Kubernetes pods and other containerized applications. For example, physical devices (e.g., servers, computing devices, data storage) and systems may be considered network assets as well as information, apps, and services accessible through physical devices and systems of the target network 110.

Hosts may store, provide, or implement access credentials 135, app(s) 140, service(s) 145, sensitive data 150, or any combination thereof. In some cases, computing devices 125 on the network may access the one or more network assets (access credentials 135, app(s) 140, service(s) 145, sensitive data 150, etc.) via the server 120 (e.g., via a host). Additionally, or alternatively, computing devices 125 may locally store or otherwise access one or more network assets of the target network 110. For example, users of the target network 110 may access app(s) 140 and service(s) 145 via the computing devices 125 directly or indirectly (e.g., via a connection between the computing devices 125 and the server 120).

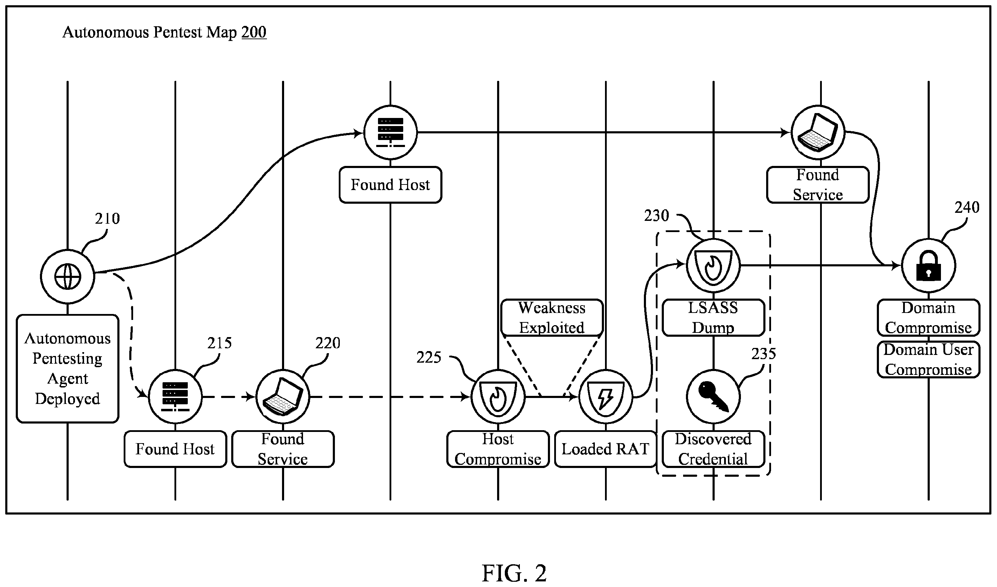

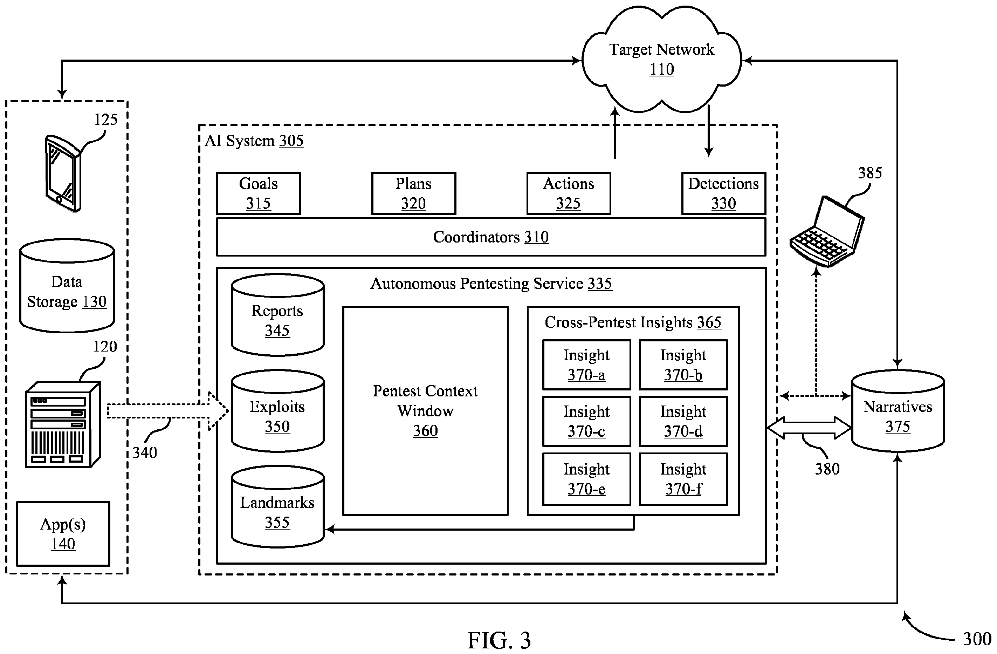

The autonomous pentesting agent 105 may perform a pentest of the target network 110. As used herein, a penetration test or a "pentest" may refer to the performance of one or more security operations that simulate a cybersecurity attack in order to identify vulnerabilities in the target network 110. The autonomous pentesting agent 105 may perform the pentest of the target network 110 using one or more artificial intelligence (AI) models. For example, the autonomous pentesting agent 105 may be "autonomous" in that the autonomous pentesting agent 105 may perform the pentest without hard-coding (e.g., deterministic coding), user inputs, or the like and, instead, by using the one or more AI models. The autonomous pentesting agent 105 may identify, via the pentest, security vulnerabilities of the target network 110. An example of an output of the pentest may be described in greater detail elsewhere herein, including with reference to FIGs. 2 and 3.

The autonomous pentesting agent 105 may, via the one or more AI models, determine and implement an attack path for a pentest. For example, the autonomous pentesting agent 105 may identify or select an asset of the target network 110 to attempt to access initially and, from that asset, another asset to attempt to access, and so on. In other words, the autonomous pentesting agent 105 may use the one or more AI models to generate (e.g., output) decisions or operations that mimic those of a potential cyber attacker. The one or more AI models may output a targeted asset of the target network 110 to be subject to an access attempt by the autonomous pentesting agent 105 based on inputs and relevant context of various assets in the target network 110. For instance, the one or more AI models may output targeted assets based on the relative position of assets within the target network 110, asset types, downstream assets (e.g., accessible after or through accessing a targeted asset), or the like.

The one or more AI models may be trained using data of previous pentests of the target network 110 or other networks. For example, an autonomous pentesting service that deploys the autonomous pentesting agent 105 may train one or more AI models used by the autonomous pentesting agent 105 using tactics, techniques, and procedures (TTPs) of attackers (e.g., human or automated pentests), autonomous pentests performed on the target network 110 previously, on other networks, or both. The autonomous pentesting agent 105 may perform improved pentests after the one or more AI models are trained using previous pentests of the target network 110. That is, as the autonomous pentesting agent 105 learns more about the target network 110, the autonomous pentesting agent 105 may perform pentests with higher performance levels (higher accuracy, higher quantities of potential attack paths, etc.).

In some cases, the pentest may be initiated internal (e.g., within) or external to (e.g., outside of a firewall) the target network 110. For example, the autonomous pentesting agent 105 may be deployed at a host device of the target network 110 (e.g., deployed to the server 120 or computing devices 125). In such cases, the autonomous pentesting agent 105 may perform the pentest as an internal user of the target network 110. Such internal pentests may be indicative of or emulate internal security threats to the network, such as from employees of an organization or an attacker that has otherwise access to the target network 110 internally or to a user of the target network 110. Alternatively, the autonomous pentesting agent 105 may be deployed at the Internet 155. For example, the autonomous pentesting agent 105 may perform the pentest as an external user of the target network 110, such as by accessing external or public-facing assets of the target network 110 on the Internet 155. In some examples, the autonomous pentesting agent 105 may be deployed via a runner. For example, a runner may be an executable process, script, or sequence, that enables automated deployment of a container (e.g., a Docker container). A container may refer to an executable package of software including code, runtime, system tools, system libraries, settings, and other components to run an application. The runner and the container may allow a user to provision and deploy pentests from a portal without manually running a launch script for the autonomous pentesting agent 105 (such as in accordance with a pentest schedule).

By performing the pentest autonomously via the autonomous pentesting agent 105, techniques described herein may support improved performance related to speed, identification of security vulnerabilities, and provision of remediation measures. For example, the pentest, when performed autonomously using the autonomous pentesting agent 105, may support improved performance and, by extension, improved security of the target network 110 against cybersecurity attacks relative to hard-coded (e.g., deterministic) or manual (e.g., human operated) pentests.

As described herein, the autonomous pentesting agent 105 may perform an autonomous pentest on the target network 110 during which the autonomous pentesting agent 105 may dynamically modify an identity security policy. For example, during the autonomous pentest, the autonomous pentesting agent 105 may identify access credentials 135. Additionally, the autonomous pentesting agent 105 may determine a capability of a user account associated with the access credentials 135 (or the credentials themselves) to access network assets (e.g., data, devices, services) of the target network 110 and/or perform operations within the target network 110. Based on the capability of the user account, the autonomous pentesting agent 105 may perform an identity assessment procedure and select modifications for the identity security policy. That is, the autonomous pentesting agent 105 may modify the identity security policy based on the capabilities of the access credentials 135-implementing more stringent (e.g., limited or restrictive) policies for access credentials 135 that are present in probable attack paths identified during the autonomous pentest.

The autonomous pentesting agent 105 may improve the security posture of the target network 110 by implementing identity security policy modifications in accordance with pentesting information, ensuring that the identity security policy is configured to inhibit unauthorized access used along attack paths identified during autonomous pentests. For example, the autonomous pentesting agent 105 may identify credentials that are exposed or vulnerable to exposure by scanning system logs, memory dumps, code repositories, role-based access control data, and other pentest findings. The autonomous pentesting agent 105 may perform in-pentest modifications to the identity security policy to address such exposures, thereby addressing credential exposures or vulnerabilities that may otherwise persist (e.g., after a manual review of the policy that fails to identify the exposure).

**FIG. 2** shows an example of an autonomous pentest map 200 that supports auto-deploying identity security controls via autonomous pentesting after credential discovery in accordance with aspects of the present disclosure. The autonomous pentest map 200 may be an example of an output or result of an autonomous pentest performed by an autonomous pentesting agent, such as a pentest performed by the autonomous pentesting agent 105 in the target network 110 as described with reference to FIG. 1. The autonomous pentest map 200 may illustrate and describe an example of events of a pentest, including operations performed by and information obtained by the autonomous pentesting agent. The autonomous pentest map 200 in the example of FIG. 2 may illustrate a map after completion of a pentest, but in some examples, the autonomous pentesting service may display and update the autonomous pentest map 200 during a pentest as events occur. For example, the autonomous pentesting service may display a real-time view that provides real-time information and updates on the progress of a currently running pentest, including status updates for injected credentials.

The autonomous pentest map 200 may include one or more types of events. In some examples, the autonomous pentest map 200 may illustrate notable events, which may be events that did or would likely (e.g., in a real-time view) lead to a critical impact. For example, the autonomous pentest map 200 may include deployment 210 (e.g., of the autonomous pentesting agent), host identification 215, service identification 220, host compromise 225, deployment of an attacker tool 230 (e.g., a remote access tool (RAT), credential identification 235, and access 240 (e.g., to a domain, a domain user, or both). An attacker tool 230, such as a RAT, may refer to software that enables full control of a tech device remotely. RATs may have legitimate uses, such as technical support, but may also be controlled by attackers with malicious intent. In the context of the autonomous pentesting agent, a RAT may be used to provide the autonomous pentesting agent with additional access to further explore attack paths during operations.

The autonomous pentest map 200 includes one possible attack path including two attack branches that is generated based on an autonomous pentest. However, it is understood that any quantity of possible attack paths having any quantity of possible attack branches may be output from an autonomous pentest. In other words, the autonomous pentest map 200 may include one or more attack paths having one or more respective attack branches. In some cases, dozens, hundreds, or thousands of possible attack paths, branches, or both may be generated based on the autonomous pentest. Additionally, it is understood that while the autonomous pentest map 200 shown in FIG. 2 displays one example of an autonomous pentest for illustration, other maps including various different events, hosts, attack paths, and attack branches may result from various autonomous pentests.

In the example of the autonomous pentest map 200, the autonomous pentesting agent may identify an attack path having two attack branches. As used herein, attack "path" may be understood to refer to a series of events, set in motion by the autonomous pentest agent, that lead to a compromise of one or more components or assets of a network. In other words, an attack path may refer to the sequence of steps or actions an attacker or autonomous pentesting agent 105 may take to compromise a system or network. An attack path may involve identifying vulnerabilities and other weaknesses, exploiting them, and navigating through the target network 110 to access valuable information or resources. Additionally, "branches" or "chains" of an attack path may refer to one or more events occurring simultaneously or in parallel that lead to the compromise. As an example, in a first attack branch of the autonomous pentest map 200, the autonomous pentesting agent may identify a host, identify a service, and compromise the host (e.g., through the service). On the compromised host, the autonomous pentesting agent may exploit a weakness identified on the service running on the host to load a RAT and remotely control the compromised host. The autonomous pentesting agent may perform, via the RAT, a Local Security Authority Subsystem Service (LSASS) dump, allowing the autonomous pentesting agent to discover a credential. The autonomous pentesting agent may use the credential in a different branch of the attack path. For example, in a second attack branch of the autonomous pentest map 200, the autonomous pentesting agent may identify a host and, through the identified host, a service. The autonomous pentesting agent may use the discovered credentials (e.g., of the first attack branch) at the service (e.g., of the second attack branch to obtain access 240 to the domain, domain user, or both.

As used herein, a weakness may refer to a vulnerability or security flaw that may be exploited by an attacker to compromise a system or network. Weaknesses may include misconfigurations, outdated software, default credentials, or other vulnerabilities that may be leveraged to gain unauthorized access or perform malicious actions. Some vulnerabilities may be publicly known. For example, an N-day may be a software or hardware vulnerability that is already publicly known, (e.g., n days since disclosure, where n is a positive integer) but there may or may not be a security update available to remediate the vulnerability. Weaknesses, if exploited, may be associated with impacts. An impact may summarize, in business terms, the effects the autonomous pentesting agent was able to achieve as a result of exploiting weaknesses in an environment. An example of an impact may be a sensitive data exposure, which may indicate that the autonomous pentesting agent was able to potentially access sensitive information given the filetype or service that is compromised (e.g., business documents in file shares, Outlook personal storage table (PST) files, confluence remote code execution (RCE), exchange RCE, etc.).

An autonomous pentesting service may display the autonomous pentest map 200 such that compromised assets may be identified and security measures may be put in place. In some cases, the autonomous pentesting service may provide mitigation recommendations according to the autonomous pentest map 200. As an example, the autonomous pentest map 200 may identify a particular host or service as a security vulnerability for a network by tracing the access 240 backwards to a host identification 215 event. Accordingly, the autonomous pentesting service may provide a mitigation recommendation to be applied to the host involved in the host identification 215 event, such as according to how the host was identified or how access was obtained to the host at the host compromise 225 event. Similarly, the autonomous pentesting service may provide a mitigation recommendation to be applied to the service involved in the service identification 220 event.

The autonomous pentesting service may support dynamic modification(s) to an identity security policy during an autonomous pentest. For example, after the credential identification 235 event, the autonomous pentesting service may assess the capabilities (e.g., privileges) of the credential and implement the modification(s) accordingly. As an example, the autonomous pentesting service may perform modification(s) to the identity security policy to remove one or more privileges associated with the credential, thereby preventing the credential from being used to achieve the access 240 to the domain and/or domain user.

**FIG. 3** shows an example of a computing environment 300 that supports auto-deploying identity security controls via autonomous pentesting after credential discovery in accordance with aspects of the present disclosure. The computing environment 300 may implement or be implemented by the computing environment 100, the autonomous pentest map 200, or both. For example, the computing environment 300 may include servers 120, computing devices 125, and app(s) 140 utilizing an AI system 305 to perform autonomous pentests.

In some examples, the AI system 305 may be a system designed to process data, learn from past experiences, and make determinations and predictions that mimic human cognitive functions (e.g., from the perspective of a potential cyber attacker). In some cases, the AI system 305 may implement or be implemented by one or more AI or machine learning (ML) models (e.g., AI/ML models). In some examples, an AI/ML model of the AI system 305 may be a supervised learning model configured to learn from labeled training data to generate predictions on inputs. In some other examples, an AI/ML model of the AI system 305 may be an unsupervised learning model that is configured to discover patterns in unlabeled data to generate predictions on inputs. In another example, the AI system 305 may implement reinforcement learning models that are configured to learn behaviors through trial- and-error (e.g., via experimentation). Additionally, or alternatively, the AI system 305 may implement neural networks (e.g., artificial neural networks (ANNs)) that include one or more layers configured to process information via a series of mathematical transformations.

Deep learning models may be a subset of neural networks designed and configured for tasks such as computer vision and natural language processing and may be used by the AI system 305. In some examples, the AI system 305 may utilize a large language model (LLM) which utilizes a neural network architecture to process, understand, and generate natural language. For example, LLMs may be trained on a relatively large corpus of data (e.g., text data, image data, audio data, video data, among others) to perform natural language processing tasks such as text generation, translation, summarization, responding to natural language queries, data generation, or any combination thereof.

The AI system 305 may be an agentic AI system, meaning that the AI system 305 may act autonomously (e.g., through the use of AI agents), at least for some operations, to achieve specified goals, make decisions, and take actions without direct human intervention. In some cases, the AI system 305 may be an agentic AI system with limited human involvement where the AI system 305 may request human guidance or user input only in certain circumstances, such as if the AI system 305 is unable to make a decision or perform a subsequent operation. Further, the AI system 305 may use one or more AI/ML models to set and pursue goals 315 without those goals 315 being specifically defined by human input to the AI system 305. The AI system 305 may further generate plans 320 and execute sequences of actions 325 to achieve those goals 315 and adapt future behavior in accordance with real-time observations and feedback about the effectiveness of the actions 325 to achieve the desired outcomes or meet targets.

For example, in some cases, utilizing one or more AI/ML models, the AI system 305 may include an autonomous pentesting service 335 and may interface with one or more coordinators 310 that coordinate goals 315 and plans 320, actions 325, and detections 330 for achieving the goals 315. For example, for autonomous pentesting, the goals 315 of the AI system 305 may be to obtain access to data stored within a target network 110, compromise (such as by obtaining unauthorized access or deploying unauthorized software to) a domain or a network asset of the target network 110, or any combination thereof. To obtain the goals 315, the AI system 305 may generate one or more plans 320 that are based on actions 325 and detections 330. For example, to determine a next action within a defined set of guardrails or instructions, the AI system 305 may generate a plan 320 that can include an action 325 to invoke (e.g., execute) one or more commands on a target network 110 to obtain a detection 330 from the target network 110.

In some examples, the target network 110 may include one or more network assets such as servers 120, computing devices 125, data storages 130, app(s) 140, or any combination thereof. Further, obtaining a detection 330 from the target network 110 may include the AI system 305 retrieving telemetry data from the one or more network assets of the target network 110. In some cases, telemetry data obtained from the target network 110 may include logs, traces, metrics, events, or any combination thereof from the one or more network assets of the target network 110. For example, a detection 330 may include some data that is obtained from the target network 110 via an autonomous pentest that aids the AI system 305 in achieving the goals 315. In one example, the detection 330 may include an autonomous pentest obtaining a credential that is used to gain unauthorized access to a network asset, which may be an example of one of the goals 315. In another example, a detection 330 may be the autonomous pentest detecting a set of patterns of events indicated within logs of the target network 110, which may be utilized for achieving a respective goal 315. For example, a goal 315 may be to perform a successful credential compromise attack to gain unauthorized access to a network asset and a detection 330 may indicate information to aid an autonomous pentesting agent in performing the credential compromise attack.

In some examples, the AI system 305 may also interface with the coordinators 310 to perform autonomous pentests as described elsewhere herein, such as with reference to FIGs. 1 and 2. When performing autonomous pentests, the AI system 305 may collect and store a relatively large quantity (such as thousands, millions, billions, or trillions) of training data points or tokens for the AI system 305 to perform subsequent autonomous pentests. For example, each action 325 (e.g., command) executed via the AI system 305 may result in a collection of a relatively large quantity of training data points that indicate whether the action 325 succeeded or failed, why the action 325 succeeded or failed, which software, policies, or tools were used to execute the action 325 that resulted in the action 325 succeeding or failing, or any combination thereof. Therefore, the AI system 305 may continuously obtain and update the training data used for training AI/ML models and perform reinforcement learning using collective intelligence to improve the weights and training of the AI/ML models.

In some examples, the training data for the AI system 305 may include telemetry data obtained from the target network 110, data obtained from servers 120, computing devices 125, and app(s) 140 via a developer pipeline 340, or both. In some cases, the training data may include indications of reports 345, exploits 350, and landmarks 355. A report 345 may indicate outputs or artifacts generated by the AI system 305 to document the discoveries, vulnerabilities, and results of an autonomous pentest. An exploit 350 may indicate the tools, techniques, operations, programs, code, and the like utilized by the AI system 305 to perform an autonomous pentest. A landmark 355 may indicate a point or marker within a network (e.g., the target network 110) to assist the AI system 305 to navigate and map an environment of the target network 110 during an autonomous pentest.

In some examples, the AI system 305 may obtain the reports 345, exploits 350, and landmarks 355 based on performing one or more autonomous pentests. In another example, one or more users (e.g., developers) may manually generate the reports 345, exploits 350, and landmarks 355 for training the AI system 305. In such cases, the one or more users may generate the data for the reports 345, exploits 350, and landmarks 355 and label the data for the AI system 305. Additionally, or alternatively, one or more users may utilize an LLM to generate the reports 345, exploits 350, and landmarks 355. For example, a user may prompt an LLM to generate the reports 345, exploits 350, and landmarks 355 by providing the LLM with a set of input parameters that indicate a scope, objectives, and constraints of an autonomous pentest. In some examples, the LLM prompt to generate the reports 345, exploits 350, and landmarks 355 may be a natural language prompt that includes instructions that indicates characteristics of the target network 110, testing protocols, compliance requirements, or any combination thereof. The LLM may then process the prompt and generate the reports 345, exploits 350, and landmarks 355 for training the AI system 305.

Utilizing the reports 345, exploits 350, and landmarks 355, the AI system 305 may perform one or more autonomous pentests by maintaining awareness of the current testing state and progress through a pentest context window 360. The pentest context window 360 may process information about ongoing pentesting operations, including successfully exploited vulnerabilities, accessed systems and data, attempted but failed exploit paths, attack paths, among others.

The AI system 305 may analyze contextual information obtained from performing autonomous pentests to generate cross-pentest insights 365 that can be applied across multiple pentesting operations. For example, as a result of training the AI system 305, one or more autonomous pentests, or both, the AI system 305 may generate a set of cross-pentest insights 365 that indicates one or more insights 370 (e.g., an insight 370-a, an insight 370-b, an insight 370-c, an insight 370-d, an insight 370-e, and an insight 370-f). For example, the insight 370-a may indicate patterns of vulnerable default configurations in software (e.g., commonly used enterprise or commercial software). In some other examples, the insight 370-b may indicate how compromised low-privilege user credentials can be leveraged to eventually gain domain admin access through privilege escalation techniques. Further, the insight 370-c and the insight 370-d may indicate common pathways where initial network access can lead to sensitive data exposure, such as finding unencrypted password files or accessing improperly secured cloud storage buckets. The insight 370-e may indicate recurring vulnerabilities in network segmentation that allow lateral movement between supposedly isolated systems. Additionally, or alternatively, the insight 370-f may indicate patterns where seemingly low-risk misconfigurations can be chained together to achieve relatively significant compromise of the target network 110. Therefore, the cross-pentest insights 365 may indicate one or more insights 370 that represent patterns and vulnerabilities that occur across different networks and testing scenarios, helping organizations better understand systemic security weaknesses and how to address such weaknesses. For example, the cross-pentest insights 365 may be added as landmarks 355 for further training the AI system 305 to perform autonomous pentests.

The cross-pentest insights 365 may be displayed to one or more computing devices 125, app(s) 140, or both to enable users to view and analyze the cross-pentest insights 365 to generate additional TTPs configured to achieve the goals 315 of the AI system 305. To display the cross-pentest insights 365 to one or more users, the AI system 305 may generate one or more narratives 375 that indicate the insights 370 obtained in response to one or more autonomous pentests. In some examples, to generate the one or more narratives 375, the AI system 305 may output (e.g., transmit) the cross-pentest insights 365 via a pipeline 380 connected to a separate AI/ML model (e.g., an LLM). For example, the AI system 305 may output the cross-pentest insights 365 to an LLM that is configured to generate the narratives 375 (e.g., the LLM is finetuned for text generation based on an input of the insights 370). In some cases, the narratives 375 may indicate detailed security postures for organizations, companies, tenants, users, groups of users, or any combination thereof. For example, a narrative 375 may be a compliance narrative that indicates one or more insights 370 about the security compliance of a target network 110. In another example, a narrative 375 may be a presentation for a company or organization that indicates the one or more vulnerabilities in a target network 110 associated with the company or organization. For example, the presentation can indicate the cross-pentest insights 365 obtained from performing one or more autonomous pentests on the target network 110 associated with the company or organization (e.g., the target network 110).

In some examples, users or devices external to the target network 110 may interact, communicate, or otherwise engage with the AI system 305 to configure pentesting parameters, perform pentesting operations on the target network 110, or analyze the results from a pentest on target network 110. For instance, a user such as a service provider for the AI system 305 may operate an external device 385 to provide information to the AI system 305 (e.g., to the coordinators 310), which identifies goals 315, plans 320, or actions 325 for pentesting the target network 110. Additionally, or alternatively, the AI system 305 may provide information, such as cross-pentest insights 365, to the external device 385. A user of the external device 385 may analyze the cross-pentest insights 365 to generate or modify narratives 375 corresponding to the results of the pentest on the target network 110. In some cases, an output of the LLM used to generate narratives 375 may be sent to the external device 385, and a user (e.g., a service provider) of the external device 385 may aggregate narratives 375 about the target network 110 for reporting or conveyance via the pentest context window 360. Alternatively, the user of the external device 385 may modify one or more narratives 375 based on goals 315, plans 320, detections 330, or other information such that the narratives 375 resulting from the pentest for the target network indicate the relevant and important information for identifying weaknesses and addressing vulnerabilities in the target network 110.

An autonomous pentesting service 335 may utilize the AI system 305 to perform an autonomous pentest on the target network 110 in which the autonomous pentesting service 335 may modify an identity security policy. For example, the autonomous pentesting service 335 may use the AI system 305 to select or determine modifications based on capabilities of credentials identified during an autonomous pentest on the target network 110. That is, the AI system 305 may generate recommendations for modification(s) to the identity security policy based on information about the credentials-including associated authorization policies, network assets accessible using the credentials, and operations able to be performed on the target network 110 using the credentials.

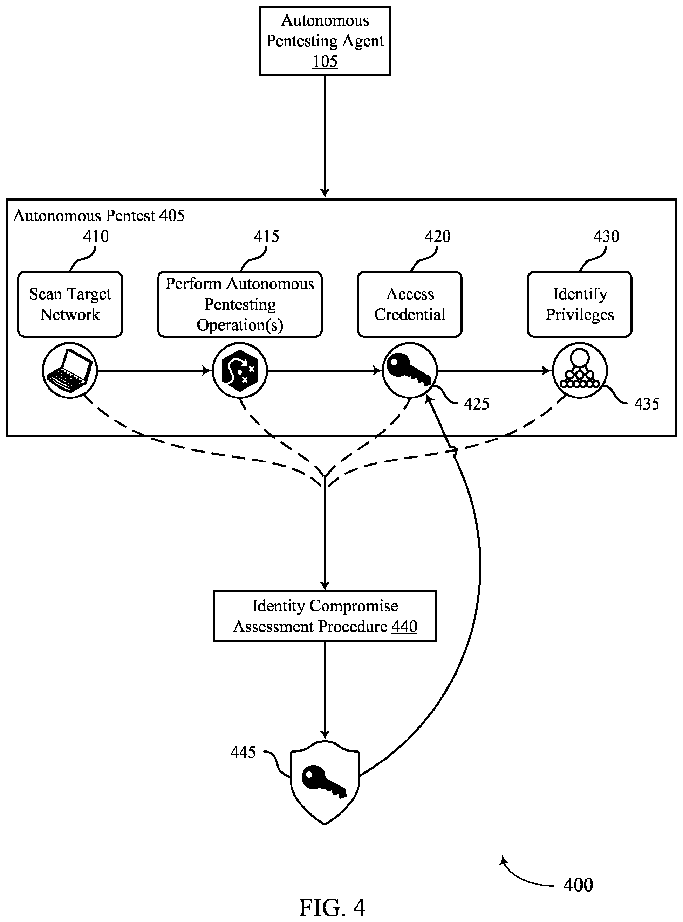

**FIG. 4** shows an example of a flow diagram 400 that supports auto-deploying identity security controls via autonomous pentesting after credential discovery in accordance with aspects of the present disclosure. The flow diagram 400 may implement or be implemented by the computing environment 100, the autonomous pentest map 200, the computing environment 300, or any combination thereof. For example, the flow diagram 400 may illustrate an autonomous pentest 405 by an autonomous pentesting agent 105 of a target network, such as the target network 110 as described with reference to FIGs. 1 and 3.

The autonomous pentesting agent 105 may perform an autonomous pentest 405 of a target network. The autonomous pentest 405 may include, at 410, a scan of the target network. For example, the autonomous pentesting agent 105 may scan the target network and identify network assets including credentials, file shares, data storage, computing devices, or other network assets described herein, including with reference to FIG. 1. Additionally, the autonomous pentesting agent 105 may scan logs, configuration files, repositories, and memory of network assets in the target network, identifying credentials that are exposed or vulnerable to exposure (i.e., weak). For example, the autonomous pentesting agent 105 may perform analysis of configuration files, heuristic analysis of access logs, and memory scraping for embedded credentials. The autonomous pentesting agent 105 may utilize pattern recognition and anomaly detection models (e.g., models of the AI system 305 described with reference to FIG. 3) trained on historical breach data to increase the likelihood of detecting credential exposure.

At 415, the autonomous pentesting agent 105 may perform autonomous pentesting operation(s). For example, the autonomous pentesting agent 105 may execute autonomous pentesting operation(s) that target vulnerabilities (e.g., common vulnerabilities and exposures (CVEs)) of network assets identified during the scan at 410. The autonomous pentesting operation(s) may include exploits that may simulate attacker behavior, such as leveraging unpatched vulnerabilities, insecure application programming interface (API) endpoints, or exposed administrative interfaces, to mimic real-world attack vectors. For example, the autonomous pentesting agent 105 may target hardcoded credentials, shadow administrator accounts, overprivileged service accounts, misconfigured multi-factor authentication (MFA) policies, or other credential-related weaknesses identified during the scan at 410.

At 420, the autonomous pentesting agent 105 may obtain access to a credential 425. For example, the autonomous pentesting agent 105 may access the credential 425 based on identifying the credential 425 in the scan at 410, based on performing one or more exploits at 415 that target a vulnerability of a network asset storing the credential 425, or both. The credential 425 may be an example of a username and password combination, a token, a certificate, a key, or another type of information that may be used to verify an identity of a user.

At 430, the autonomous pentesting agent 105 may identify privileges 435 associated with the credential 425. The privileges 435 may refer to a capability of the credential 425 to access network assets of the target network and/or of a user account associated with the credential 425 to perform operations within the target network. The privileges 435 may be defined according to an identity security policy 445, which may in some cases also define authentication policies associated with the credential 425 (e.g., whether authentication is required and/or which authentication factor(s) are required when using the credential 425), For example, the privileges 435 may define which network assets a user associated with the credential 425 is permitted to access and what operations the user is permitted to perform at those network assets. In accordance with the privileges 435, the autonomous pentesting agent 105 may identify exploits or projected attack paths that use the credential 425, including lateral movements within the target network and privilege escalation. For example, the autonomous pentesting agent 105 may identify how network assets may be chained together in one or more attack paths using the credential 425. In other words, the autonomous pentesting agent 105 may identify an attack surface associated with the credential 425 based on the privileges 435 and other information in the identity security policy 445.

The autonomous pentesting agent 105 may perform an identity compromise assessment procedure 440 on the credential 425. For example, the autonomous pentesting agent 105 may evaluate the privileges 435 and attack surface associated with the credential 425 to determine a risk level associated with the credential 425. That is, the autonomous pentesting agent 105 may determine how severe an impact to the target network would be if the credential 425 were obtained by a malicious actor (e.g., a confidentiality, integrity, and availability (CIA) of the credential 425). The risk level or potential severity associated with the credential 425 may be based on a quantity of network assets accessible using the credential 425, priority levels of those network assets, privilege escalation opportunities using the credential 425, attack paths that include the credential 425, and the identity security policy 445 that manages use of the credential 425. Additionally, the risk level may be based on the frequency of credential usage, time-of-day access patterns, whether the credential 425 is shared among users or systems, and whether the credential 425 bypasses established MFA enforcement points. As an example, the autonomous pentesting agent 105 may determine that the credential 425 has a relatively high risk level based on the credential 425 granting administrative access, appearing in leaked files, and/or lacking MFA protection.

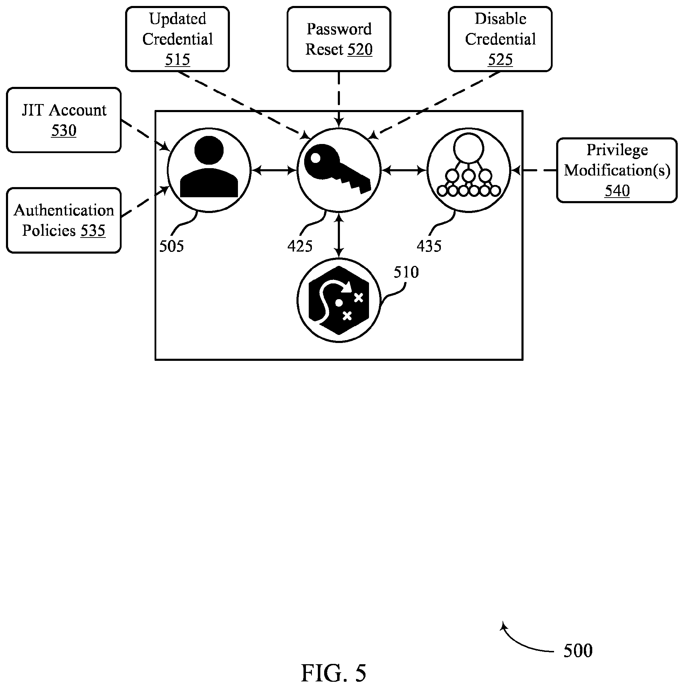

The autonomous pentesting agent 105 may implement one or more modifications to the identity security policy 445 based on the identity compromise assessment procedure 440. For example, the autonomous pentesting agent 105 may select or determine one or more modifications in accordance with the determined risk level associated with the credential 425. The one or more modifications may inhibit unauthorized use of the credential 425. In other words, the one or more modifications may impede, hinder, or otherwise restrict use of the credential 425 such that the credential 425 is less likely or unable to be used in an unauthorized or malicious manner (e.g., by applying increased restrictions to the credential 425). Examples of modifications to the identity security policy 445 are described in greater detail elsewhere herein, including with reference to FIG. 5.

The autonomous pentesting agent 105 may perform the one or more modifications to the identity security policy 445 during the autonomous pentest 405. For example, the autonomous pentesting agent 105 may initiate the one or more modifications in response to accessing the credential 425 during the autonomous pentest 405 (e.g., automatic security responses). The autonomous pentesting agent 105 may perform the one or more modifications prior to other operations of the autonomous pentest 405. That is, the autonomous pentesting agent 105 may pause the autonomous pentest 405 (or performance of pentesting operations, such as exploits) to perform the one or more modifications to the identity security policy 445 such that a time gap between identifying exposure of the credential 425 and addressing the exposure is reduced (compared to modifying the policy after the pentest). In some examples, the autonomous pentesting agent 105 may pause the autonomous pentest 405 to perform the modifications when a risk level exceeds a threshold (e.g., for high-risk credentials).

In some examples, the autonomous pentesting agent 105 may indicate the one or more modifications to the identity security policy 445 to an identity platform associated with the target network. For example, the autonomous pentesting agent 105 may transmit an indication of the one or more modifications to Okta, Microsoft Entra ID (or Azure Active Directory (AD)), AWS Identity and Access Management (IAM), CyberArk, JumpCloud, or other identity providers associated with the target network. That is, the identity providers may store record(s) of identity information associated with the target network, including the identity security policy 445, and the autonomous pentesting agent 105 may update such record(s) by indicating the one or more modifications. Additionally, or alternatively, the autonomous pentesting agent 105 may output an indication of the one or more modifications to a user associated with the target network, such as via a user interface or dashboard of an autonomous pentesting service associated with the autonomous pentesting agent 105.

The autonomous pentesting agent 105 may indicate aspects of the autonomous pentest 405-including access to the credential 425 and the one or more modifications-to a security platform associated with the target network. For example, the autonomous pentesting agent 105 may indicate information about the autonomous pentest 405, including credential exposures and mitigation actions, to a Security and Information Event Management (SIEM) or Security Orchestration, Automation, and Response (SOAR) platform associated with the target network.

In some examples, the autonomous pentesting agent 105 may verify deployment of the one or more modifications to the identity security policy 445 after the autonomous pentest 405. That is, in a subsequent pentest (or subsequent pentesting operations during the same pentest), the autonomous pentesting agent 105 may perform autonomous pentesting operations that target the credential 425. If the autonomous pentesting agent 105 fails to access or use the credential 425, the autonomous pentesting agent 105 may validate that the identity security policy 445 inhibits unauthorized use of the credential 425. Alternatively, if the autonomous pentesting agent 105 is able to access or use the credential 425, the autonomous pentesting agent 105 may reassess the risk level of the credential 425 and update the identity security policy 445.

While the example described with reference to FIG. 4 involves a single credential, it may be understood that techniques described herein may be used to manage unauthorized use of multiple credentials. For example, the autonomous pentesting agent 105 may access one or more credentials, perform the identity compromise assessment procedure 440 on one or more credentials, and perform one or modifications to the identity security policy 445 that inhibits unauthorized use of the one or more credentials.

In addition to or alternatively from performing the one or more modifications to the identity security policy 445, the autonomous pentesting agent 105 may deploy honeytoken credentials. For example, the autonomous pentesting agent 105 may generate honeytoken or tripwire (also referred to as CanaryToken) credentials that, when used, trigger a notification. In some examples, the honeytoken credentials may be configured to appear as if they provide administrative access or are associated with administrative accounts, which may increase a probability of attracting and detecting a malicious actor within the target network.

**FIG. 5** shows an example of identity security controls 500 that may be deployed via autonomous pentesting after credential discovery in accordance with aspects of the present disclosure. The identity security controls 500 may implement or be implemented by the computing environment 100, the autonomous pentest map 200, the computing environment 300, the flow diagram 400, or any combination thereof. For example, the identity security controls 500 may illustrate modifications that may be performed to an identity security policy, such as the identity security policy 445 as described with reference to FIG. 4.

During an autonomous pentest, such as the autonomous pentest 405 as described with reference to FIG. 4, an autonomous pentesting agent may identify the credential 425 associated with a user account 505. Additionally, the autonomous pentesting agent may identify privileges 435 and an attack surface 510 associated with the credential 425. For example, the autonomous pentesting agent may identify attack path(s) involving the credential 425 and leveraging the privileges 435, including lateral movement and privilege escalation.

The autonomous pentesting agent may perform one or more modifications to an identity security policy based on an identity compromise assessment procedure on the credential 425, such as the identity security policy 445 described with reference to FIG. 4. That is, the autonomous pentesting agent may select and implement modifications to the identity security policy based on the privileges 435 and the attack surface 510 associated with the credential 425. The one or more modifications may include any combination of the modifications described with reference to FIG. 5.

For example, the one or more modifications may include an updated credential 515. That is, the autonomous pentesting agent may rotate the credential 425 by revoking the credential 425 and providing the updated credential 515. In other words, the autonomous pentesting agent may revoke the credential 425 such that the credential 425 is unusable to access the user account 505 associated with the credential 425 and replace the credential 425 with the updated credential 515, where the user account 505 is accessible via the updated credential 515. In some examples, the autonomous pentesting agent may revoke and replace the credential 425 via an integration with (e.g., one or more communications with) an identity platform, such as with Azure AD, Okta, or AWS IAM. As an example, the autonomous pentesting agent may invalidate and replace leaked API keys or Open Authorization (OAuth) tokens managed by the identity platform.

In some examples, the one or more modifications may include triggering a password reset 520. For example, the autonomous pentesting agent may invalidate an existing password and require a user of the user account 505 to reset the password during a next sign-on attempt. That is, the autonomous pentesting agent may configure the password reset 520 prior to access being granted to the user account 505 associated with the credential 425. In such examples, the autonomous pentesting agent may transmit a notification to a user associated with the user account 505 indicating that the password reset 520 is configured.

Additionally, or alternatively, the one or more modifications may include disabling the credential 525. For example, the autonomous pentesting agent may identify that the user account 505 has not been accessed for a duration that satisfies a dormancy threshold and, accordingly, may disable the credential 425. In other words, the autonomous pentesting agent may disable the credential 425 or the user account 505 associated with the credential 425 based on a duration elapsed between the user account 505 being accessed and the autonomous pentest on the target network. In some examples, the autonomous pentesting agent may disable the credential based on the capability of the credential 425 to access network assets exceeding a threshold quantity of assets (e.g., based on the user account 505 being overprivileged).

The one or more modifications may include converting the user account 505 to a Just-in-Time (JIT) account 530. For example, instead of the user account 505 being able to access one or more network assets and perform one or more operations in the target network continuously, the user account 505 may be configured to obtain time-bound, purpose-limited access upon request, enforced via automated policy engines or approval workflows. In other words, the autonomous pentesting agent may convert the user account 505 associated with the credential 425 to a JIT account 530, where the user account 505 is accessible after request and for a threshold duration in accordance with being converted to the JIT account 530. That is, in order to access a network asset, a user of the user account 505 may request and be granted the access, and such access may expire. Additionally, access may be granted based on the request being justified. For example, a security platform associated with the network may evaluate whether tasks assigned to the user account 505 require access to the network asset.

In some examples, the one or more modifications may include implementing authentication policies 535. For example, the autonomous pentesting agent may configure the user account 505 to be accessible after provision of one or more authentication factors. In some examples, configuring the authentication policies 535 for the user account 505 may include triggering MFA enrollment. That is, the autonomous pentesting agent may configure access to the user account 505 based on enrollment to MFA, the MFA including provision of two or more verification factors before access to the user account 505 is granted.

Additionally, or alternatively, the authentication policies 535 may include passwordless authentication procedures, hardware key authentication procedures, or both. For example, the autonomous pentesting agent may configure access to the user account 505 via a passwordless authentication procedure or a hardware key authentication procedure, where the passwordless authentication procedure or the hardware key authentication procedure replaces or supplements use of the credential 425 to access the user account 505. The passwordless authentication procedure may involve biometrics, possession of a device or token, a one-time password (OTP), or any combination thereof. That is, passwordless authentication may, in some examples, involve verification of identity through authentication factors which are not knowledge based (and therefore are less likely to be stolen). The hardware key authentication procedure may involve a physical device (e.g., a YubiKey) which may be used to generate a cryptographic signature that confirms an identity of the user.

The one or more modifications may include privilege modification(s) 540. That is, the autonomous pentesting agent may reconfigure the privileges 435 of the credential 425 or the user account 505 based on identifying that one or more of the privileges 435 are capable of being used in an attack path, unused by the user account 505, or both. For example, the autonomous pentesting agent may remove one or more privileges of the privileges 435 associated with the user account 505 based on one or more tasks associated with the user account 505.

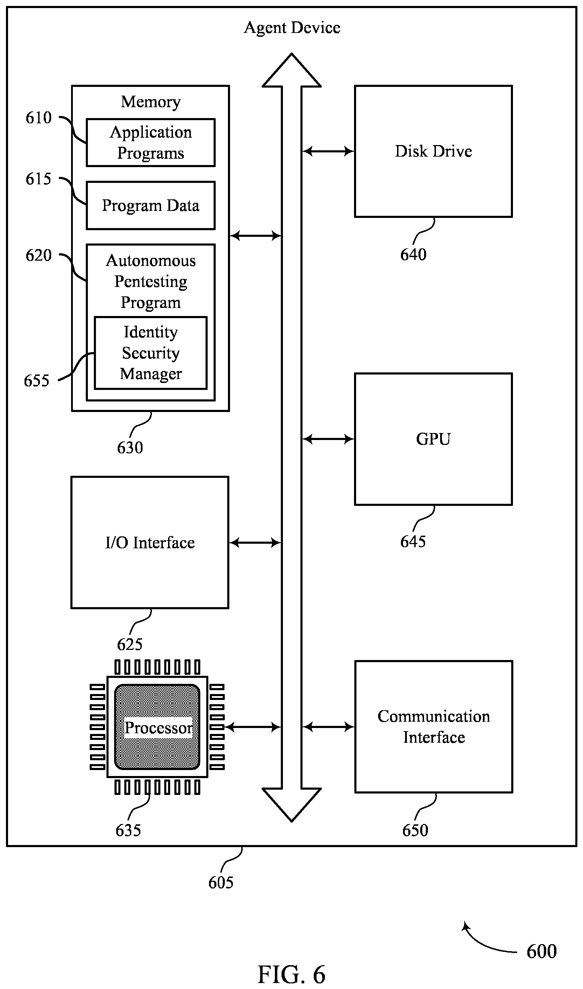

**FIG. 6** shows a diagram of a system 600 including an agent device 605 that supports auto-deploying identity security controls via autonomous pentesting after credential discovery in accordance with aspects of the present disclosure. The agent device 605 may be an example of a device or server on which an autonomous pentesting agent 105 is deployed as described herein. The agent device 605 may include components for auto-deploying identity security controls via autonomous pentesting after credential discovery, such as a memory 630 including application programs 610, program data 615, an autonomous pentesting program 620, and a identity security manager 655; an input/output (I/O) interface 625; a processor 635; a disk drive 640; a graphics processing unit (GPU) 645; and a communication interface 650. Each of these components may communicate, directly or indirectly, with one another (e.g., via one or more buses, communications links, communications interfaces, or any combination thereof).

The I/O interface 625 may support connection of the agent device 605 with one or more other devices. For example, the agent device 605 may connect to keyboards, mice, printers, hard disks, or the like via the I/O interface 625. The I/O interface 625 may communicate with the processor 635. That is, the processor 635 may process signals from devices connected to the agent device 605 via the I/O interface 625.

Memory 630 may include RAM, ROM, or both. The memory 630 may store computer-readable, computer-executable software including instructions that, when executed, cause at least one processor 635 to perform various functions described herein, such as functions supporting auto-deploying identity security controls via autonomous pentesting after credential discovery. In some cases, the memory 630 may contain, among other things, a basic input/output system (BIOS), which may control basic hardware or software operation such as the interaction with peripheral components or devices. The memory 630 may be an example of a single memory or multiple memories. For example, the agent device 605 may include one or more memories 630.

The application programs 610 in the memory 630 may be examples of app(s) 140 as described with reference to FIG. 1. For example, the application programs 610 may be installed on the memory 630 of the agent device 605, among other devices in a network. The application programs 610 may be examples of software applications or computer programs that are implemented to carry out one or more functions or tasks.

The program data 615 may be data related to the application programs 610. Program data 615 may be an example of or refer to running data of programs and applications installed on the memory 630 of the agent device 605. In some examples, the program data 615 may include various data, including code that allows the application programs 610 to perform the one or more functions or tasks.

The processor 635 may include an intelligent hardware device, (e.g., a general-purpose processor, a digital signal processor (DSP), a CPU, a microcontroller, an application-specific integrated circuit (ASIC), a field programmable gate array (FPGA), a programmable logic device, a discrete gate or transistor logic component, a discrete hardware component, or any combination thereof). The processor 635 may be configured to execute computer-readable instructions stored in at least one memory 630 to perform various functions (e.g., functions or tasks supporting auto-deploying identity security controls via autonomous pentesting after credential discovery). Though a single processor 635 is depicted in the example of FIG. 6, it is to be understood that the system 600 may include any quantity of one or more of processors 635 and that a group of processors 635 may collectively perform one or more functions ascribed herein to a processor, such as the processor 635. The processor 635 may be an example of a single processor or multiple processors. For example, the agent device 605 may include one or more processors 635.

The disk drive 640 may be configured to store data that is generated, processed, stored, or otherwise used by the system 600. In some cases, the disk drive 640 may include one or more hard disk drives (HDDs), one or more solid-state drives (SSDs), or both. In some examples, the disk drive 640 may be an example of a single database, a distributed database, multiple distributed databases, a data store, a data lake, or an emergency backup database. In some examples, the disk drive 640 may be an example of one or more components described with reference to FIG. 1.

GPU 645 may be configured to store graphics-related data. The GPU 645 may store and manage data related to graphics and video processing. In some examples, the GPU 645 may be an example of or a component of a graphics card. The GPU 645 may use components of the memory 630, including the RAM, for temporary storage. For example, the GPU 645 may move data from the RAM of the memory 630 to the GPU 645 for graphics and video processing.

The communication interface 650 may enable the agent device 605 to exchange information (e.g., input information, output information, or both) with other systems or devices (not shown). For example, the communication interface 650 may enable the agent device 605 to connect to a network (e.g., a target network 110 as described herein). The communication interface 650 may include one or more wireless network interfaces, one or more wired network interfaces, or any combination thereof.

The autonomous pentesting program 620 may be an example of a program of an autonomous pentesting service that is installed on the memory 630 of the agent device 605. The autonomous pentesting program 620 may execute an autonomous pentest of a network (e.g., a target network 110 as described herein) accessed by the agent device 605, such as accessed via the communication interface 650. That is, the autonomous pentesting program 620 may be configured to perform an autonomous pentest as described herein, including an autonomous pentest involving deploying identity security controls based on autonomous pentesting.

The identity security manager 655 may support deploying identity security controls based on autonomous pentesting in accordance with examples as disclosed herein. For example, the identity security manager 655 may be configured as or otherwise support a means for executing one or more autonomous pentesting operations during an autonomous pentest on a network including multiple network assets. The identity security manager 655 may be configured as or otherwise support a means for performing an identity compromise assessment procedure on one or more credentials identified during the autonomous pentest based on the one or more autonomous pentesting operations, where performing the identity compromise assessment procedure includes: determining, for a credential of the one or more credentials, a capability of the credential to access network assets of the multiple network assets of the network and of a user account associated with the credential to perform operations within the network. The identity security manager 655 may be configured as or otherwise support a means for performing one or more modifications to an identity security policy that manages use of the one or more credentials in accordance with the identity compromise assessment procedure, where the one or more modifications inhibit unauthorized use of the credential of the one or more credentials.

By including or configuring the identity security manager 655 in accordance with examples as described herein, the agent device 605 may support techniques for improved network security.

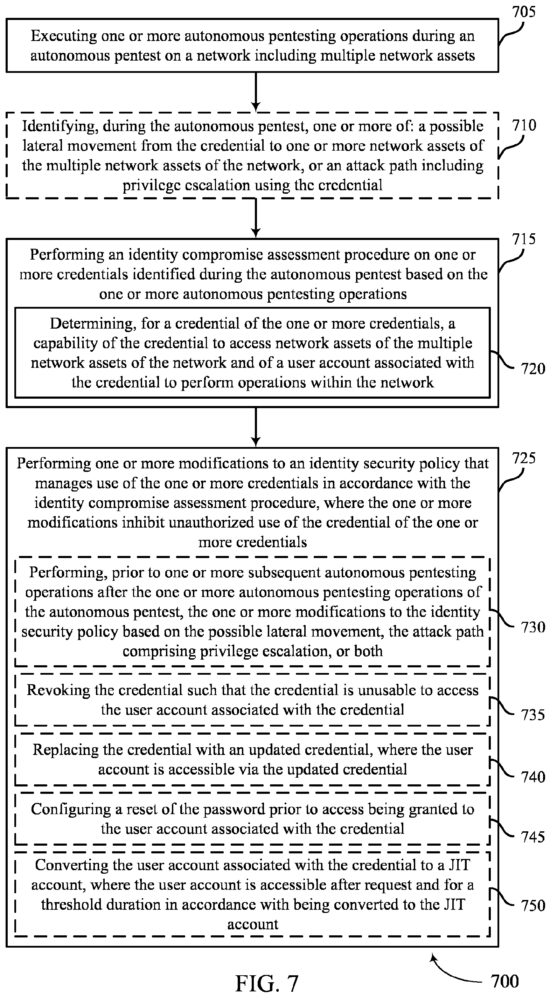

**FIG. 7** shows a flowchart illustrating a method 700 that supports auto-deploying identity security controls via autonomous pentesting after credential discovery in accordance with aspects of the present disclosure. The operations of the method 700 may be implemented by an agent device 605 or its components as described herein. In some examples, an agent device may execute a set of instructions to control the functional elements of the agent device to perform the described functions. Additionally, or alternatively, the agent device may perform aspects of the described functions using special-purpose hardware.

At 705, the method 700 may include executing one or more autonomous pentesting operations during an autonomous pentest on a network including multiple network assets.

At 710, the method 700 may include identifying, during the autonomous pentest, one or more of: a possible lateral movement from the credential to one or more network assets of the multiple network assets of the network, or an attack path including privilege escalation using the credential.

At 715, the method 700 may include performing an identity compromise assessment procedure on one or more credentials identified during the autonomous pentest based on the one or more autonomous pentesting operations. Performing the identity compromise assessment procedure may include, at 720, determining, for a credential of the one or more credentials, a capability of the credential to access network assets of the multiple network assets of the network and of a user account associated with the credential to perform operations within the network.

At 725, the method 700 may include performing one or more modifications to an identity security policy that manages use of the one or more credentials in accordance with the identity compromise assessment procedure, where the one or more modifications inhibit unauthorized use of the credential of the one or more credentials.

In some examples, at 730, performing the one or more modifications may include performing, prior to one or more subsequent autonomous pentesting operations after the one or more autonomous pentesting operations of the autonomous pentest, the one or more modifications to the identity security policy based on the possible lateral movement, the attack path comprising privilege escalation, or both.

In some examples, at 735, performing the one or more modifications may include revoking the credential such that the credential is unusable to access the user account associated with the credential.

In some examples, at 740, performing the one or more modifications may include replacing the credential with an updated credential, where the user account is accessible via the updated credential.

In some examples, at 745, performing the one or more modifications may include configuring a reset of the password prior to access being granted to the user account associated with the credential.

In some examples, at 750, performing the one or more modifications may include converting the user account associated with the credential to a JIT account, where the user account is accessible after request and for a threshold duration in accordance with being converted to the JIT account.

The following provides an overview of aspects of the present disclosure:
Aspect 1: A method for deploying identity security controls based on autonomous pentesting, comprising: executing one or more autonomous pentesting operations during an autonomous pentest on a network comprising a plurality of network assets; performing an identity compromise assessment procedure on one or more credentials identified during the autonomous pentest based at least in part on the one or more autonomous pentesting operations, wherein performing the identity compromise assessment procedure comprises: determining, for a credential of the one or more credentials, a capability of the credential to access network assets of the plurality of network assets of the network and of a user account associated with the credential to perform operations within the network; and performing one or more modifications to an identity security policy that manages use of the one or more credentials in accordance with the identity compromise assessment procedure, wherein the one or more modifications inhibit unauthorized use of the credential of the one or more credentials.
Aspect 2: The method of aspect 1, further comprising: identifying, during the autonomous pentest, one or more of: a possible lateral movement from the credential to one or more network assets of the plurality of network assets of the network; or an attack path comprising privilege escalation using the credential; and performing, prior to one or more subsequent autonomous pentesting operations after the one or more autonomous pentesting operations of the autonomous pentest, the one or more modifications to the identity security policy based at least in part on the possible lateral movement, the attack path comprising privilege escalation, or both.
Aspect 3: The method of any of aspects 1 through 2, wherein performing the one or more modifications to the identity security policy comprises: revoking the credential such that the credential is unusable to access the user account associated with the credential; and replacing the credential with an updated credential, wherein the user account is accessible via the updated credential.
Aspect 4: The method of aspect 3, wherein the credential is revoked and replaced via one or more communications with an identity management platform associated with the network.
Aspect 5: The method of any of aspects 3 through 4, wherein the credential comprises one or more username and password combinations, one or more API keys, one or more OAuth tokens, or a combination thereof.
Aspect 6: The method of any of aspects 1 through 5, wherein the credential comprises a password, and wherein performing the one or more modifications to the identity security policy comprises: configuring a reset of the password prior to access being granted to the user account associated with the credential.
Aspect 7: The method of aspect 6, further comprising: transmitting a notification to a user associated with the user account indicating that the reset of the password is configured.
Aspect 8: The method of any of aspects 1 through 7, wherein performing the one or more modifications to the identity security policy comprises: converting the user account associated with the credential to a JIT account, wherein the user account is accessible after request and for a threshold duration in accordance with being converted to the JIT account.
Aspect 9: The method of any of aspects 1 through 8, wherein performing the one or more modifications to the identity security policy comprises: disabling the credential or the user account associated with the credential based at least in part on one or more of: the capability of the credential to access the network assets exceeding a threshold quantity of assets, or a duration elapsed between the user account being accessed and the autonomous pentest on the network.
Aspect 10: The method of any of aspects 1 through 9, wherein performing the one or more modifications to the identity security policy comprises: removing one or more privileges of a plurality of privileges associated with the user account based at least in part on one or more tasks associated with the user account, the plurality of privileges associated with the user account corresponding to the capability of the credential to access the network assets of the network and the credential to perform operations within the network.
Aspect 11: The method of any of aspects 1 through 10, wherein performing the one or more modifications to the identity security policy comprises: configuring access to the user account based at least in part on enrollment to MFA, the MFA comprising provision of two or more verification factors before access to the user account being granted.
Aspect 12: The method of any of aspects 1 through 11, wherein performing the one or more modifications to the identity security policy comprises: configuring access to the user account via a passwordless authentication procedure or a hardware key authentication procedure, wherein the passwordless authentication procedure or the hardware key authentication procedure replaces or supplements use of the credential to access the user account.
Aspect 13: The method of aspect 12, wherein the passwordless authentication procedure comprises: verifying an identity of a user that requests access to the user account based at least in part on one or more of: one or more biometric inputs, an OTP, or a security token.
Aspect 14: The method of any of aspects 1 through 13, wherein performing the one or more modifications to the identity security policy comprises: generating a tripwire credential, wherein use of the tripwire credential triggers a notification of a suspected attack on the network.
Aspect 15: The method of any of aspects 1 through 14, further comprising: transmitting one or more communications to a SIEM or a SOAR platform associated with the network, the one or more communications indicative of the one or more credentials identified during the autonomous pentest, the identity compromise assessment procedure, the one or more modifications to the identity security policy, or any combination thereof.
Aspect 16: The method of any of aspects 1 through 15, further comprising: executing one or more second autonomous pentesting operations during a second autonomous pentest on the network, the one or more second autonomous pentesting operations targeting the one or more credentials and verifying whether the one or more modifications to the identity security policy inhibit the unauthorized use of the credential.
Aspect 17: The method of any of aspects 1 through 16, further comprising: identifying the one or more credentials based at least in part on accessing one or more logs, one or more configuration files, one or more repositories, one or more memory dumps, or any combination thereof during the autonomous pentest on the network, wherein the identity compromise assessment procedure is performed based at least in part on the one or more identified credentials.
Aspect 18: The method of any of aspects 1 through 17, wherein the one or more credentials comprise one or more passwords, one or more hardcoded credentials, one or more shadow administrator credentials, one or more service credentials, or any combination thereof.
Aspect 19: An apparatus for deploying identity security controls based on autonomous pentesting, comprising: one or more memories storing processor-executable code; and one or more processors coupled with the one or more memories and individually or collectively operable to execute the code to cause the apparatus to perform a method of any of aspects 1 through 18.
Aspect 20: A non-transitory computer-readable medium storing code for deploying identity security controls based on autonomous pentesting, the code comprising instructions executable by one or more processors to perform a method of any of aspects 1 through 18.
Aspect 21: An apparatus for deploying identity security controls based on autonomous pentesting, comprising at least one means for performing a method of any aspects 1 through 18.

It should be noted that these methods describe examples of implementations, and that the operations and the steps may be rearranged or otherwise modified such that other implementations are possible. In some examples, aspects from two or more of the methods may be combined. For example, aspects of each of the methods may include steps or aspects of the other methods, or other steps or techniques described herein.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

Information and signals described herein may be represented using any of a variety of different technologies and techniques. For example, data, instructions, commands, information, signals, bits, and symbols that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration). The functions of each unit may also be implemented, in whole or in part, with instructions embodied in a memory, formatted to be executed by one or more general or application-specific processors.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can comprise RAM, ROM, electrically erasable programmable ROM (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (for example, a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

As used herein, including in the claims, the article "a" before a noun is openended and understood to refer to "at least one" of those nouns or "one or more" of those nouns. Thus, the terms "a,"at least one," "one or more," "at least one of one or more" may be interchangeable. For example, if a claim recites "a component" that performs one or more functions, each of the individual functions may be performed by a single component or by any combination of multiple components. Thus, the term "a component" having characteristics or performing functions may refer to "at least one of one or more components" having a particular characteristic or performing a particular function. Subsequent reference to a component introduced with the article "a" using the terms "the" or "said" may refer to any or all of the one or more components. For example, a component introduced with the article "a" may be understood to mean "one or more components," and referring to "the component" subsequently in the claims may be understood to be equivalent to referring to "at least one of the one or more components."

In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein.

## Claims

1. A method (700) for deploying identity security controls based on autonomous pentesting, comprising:
executing (705) one or more autonomous pentesting operations during an autonomous pentest (405) on a network (110) comprising a plurality of network assets (120, 125, 130, 135, 140, 145, 150);
performing (715) an identity compromise assessment procedure (440) on one or more credentials (425) identified during the autonomous pentest (405) based at least in part on the one or more autonomous pentesting operations, wherein performing (715) the identity compromise assessment procedure (440) comprises:
determining (720), for a credential (425) of the one or more credentials (425), a capability of the credential (425) to access network assets of the plurality of network assets (120, 125, 130, 135, 140, 145, 150) of the network (110) and of a user account (505) associated with the credential (425) to perform operations within the network (110); and
performing (725) one or more modifications to an identity security policy (445) that manages use of the one or more credentials (425) in accordance with the identity compromise assessment procedure (440), wherein the one or more modifications inhibit unauthorized use of the credential (425) of the one or more credentials (425).

2. The method (700) of claim 1, further comprising:
identifying (710), during the autonomous pentest (405), one or more of:
a possible lateral movement from the credential (425) to one or more network assets of the plurality of network assets (120, 125, 130, 135, 140, 145, 150) of the network (110); or
an attack path comprising privilege escalation using the credential (425); and
performing (730), prior to one or more subsequent autonomous pentesting operations and after the one or more autonomous pentesting operations of the autonomous pentest (405), the one or more modifications to the identity security policy (445) based at least in part on the possible lateral movement, the attack path comprising privilege escalation, or both.

3. The method (700) of claim 1, wherein performing (725) the one or more modifications to the identity security policy (445) comprises:
revoking (735) the credential (425) such that the credential (425) is unusable to access the user account (505) associated with the credential (425); and
replacing (740) the credential (425) with an updated credential (515), wherein the user account (505) is accessible via the updated credential.

4. The method (700) of claim 3, wherein the credential (425) is revoked and replaced via one or more communications with an identity management platform associated with the network (110).

5. The method (700) of claim 1, wherein the credential (425) comprises a password, and wherein performing (725) the one or more modifications to the identity security policy (445) comprises:
configuring (745) a reset (520) of the password prior to access being granted to the user account (505) associated with the credential (425); and
transmitting a notification to a user associated with the user account (505) indicating that the reset (520) of the password is configured.

6. The method (700) of claim 1, wherein performing (725) the one or more modifications to the identity security policy (445) comprises:
converting (750) the user account (505) associated with the credential (425) to a Just-in-Time, JIT, account (530), wherein the user account (505) is accessible after request and for a threshold duration in accordance with being converted to the JIT account (530).

7. The method (700) of claim 1, wherein performing (725) the one or more modifications to the identity security policy (445) comprises:
disabling the credential (425) or the user account (505) associated with the credential (425) based at least in part on one or more of: the capability of the credential (425) to access the network assets exceeding a threshold quantity of assets, or a duration elapsed between the user account (505) being accessed and the autonomous pentest (405) on the network (110).

8. The method (700) of claim 1, wherein performing (725) the one or more modifications to the identity security policy (445) comprises:
removing one or more privileges (435) of a plurality of privileges (435) associated with the user account (505) based at least in part on one or more tasks associated with the user account (505), the plurality of privileges (435) associated with the user account (505) corresponding to the capability of the credential to access the network assets of the network (110) and the credential to perform operations within the network (110).

9. The method (700) of claim 1, wherein performing (725) the one or more modifications to the identity security policy (445) comprises:
configuring access to the user account (505) based at least in part on enrollment to multi-factor authentication, MFA, the MFA comprising provision of two or more verification factors before access to the user account (505) being granted.

10. The method (700) of claim 1, wherein performing (725) the one or more modifications to the identity security policy (445) comprises:
configuring access to the user account (505) via a passwordless authentication procedure or a hardware key authentication procedure, wherein the passwordless authentication procedure or the hardware key authentication procedure replaces or supplements use of the credential (425) to access the user account (505).

11. The method (700) of claim 10, wherein the passwordless authentication procedure comprises:
verifying an identity of a user that requests access to the user account (505) based at least in part on one or more of: one or more biometric inputs, a one-time password, OTP, or a security token.

12. The method (700) of claim 1, wherein performing (725) the one or more modifications to the identity security policy (445) comprises:
generating a tripwire credential, wherein use of the tripwire credential triggers a notification of a suspected attack on the network (110).

13. The method (700) of claim 1, further comprising:
transmitting one or more communications to a Security Information and Event Management, SIEM, or a Security Orchestration, Automation, and Response, SOAR, platform associated with the network (110), the one or more communications indicative of the one or more credentials identified during the autonomous pentest (405), the identity compromise assessment procedure (440), the one or more modifications to the identity security policy (445), or any combination thereof.

14. The method (700) of claim 1, further comprising:
executing one or more second autonomous pentesting operations during a second autonomous pentest on the network (110), the one or more second autonomous pentesting operations targeting the one or more credentials (425) and verifying whether the one or more modifications to the identity security policy (445) inhibit the unauthorized use of the credential (425).

15. The method (700) of claim 1, further comprising:
identifying the one or more credentials (425) based at least in part on accessing one or more logs, one or more configuration files, one or more repositories, one or more memory dumps, or any combination thereof during the autonomous pentest on the network (110), wherein the identity compromise assessment procedure (440) is performed based at least in part on the one or more identified credentials.
